# EUROPÄISCHE PATENTSCHRIFT

(11) **EP 2 010 419 B1**
(45) Veröffentlichungstag und Bekanntmachung des Hinweises auf die Patenterteilung: **05.10.2016**
(21) Anmeldenummer: 07722251.1
(22) Anmeldetag: 19.04.2007
(51) Int. Cl.: B60T 8/171, G01C 21/28, B60T 8/172

(54) **VERFAHREN ZUR KALIBRIERUNG EINER GIERRATENMESSUNG**
METHOD FOR CALIBRATION OF YAW RATE MEASUREMENT
PROCÉDÉ DE CALIBRAGE D'UNE MESURE DE LA VITESSE DE LACET

(30) Priorität: 25.04.2006 DE 102006018974
(43) Veröffentlichungstag der Anmeldung: 07.01.2009
(73) Patentinhaber: ADC Automotive Distance Control Systems GmbH, 88131 Lindau (DE)
(72) Erfinder: WALTER, Michael, 88239 Neuravensburg (DE); ZOBEL, Matthias, 88142 Wasserburg (DE); HOER, Johannes, 90547 Stein (DE)
(74) Vertreter: Büchner, Jörg
(86) Internationale Anmeldenummer: PCT/DE2007/000693
(87) Internationale Veröffentlichungsnummer: WO 2007/121720

(56) Entgegenhaltungen:
- EP-A- 1 258 708
- EP-A2- 0 893 320
- DE-A1- 10 327 695
- DE-C1- 19 502 858
- US-A- 5 274 576

## Beschreibung

Die Erfindung betrifft ein Verfahren zur Kalibrierung einer Gierratenmessung in einem Kraftfahrzeug.

Eine genaue Bestimmung der Gierrate in einem Kraftfahrzeug ist z. B. für Fahrerassistenzsysteme wie ESP (Elektronisches Stabilitätsprogramm), ABS (Antiblockiersystem) von Interesse. Zudem ist die Kenntnis der Gierrate und einem daraus ableitbaren Wankwinkel für Sensorsysteme zur Umgebungserfassung von Bedeutung. Kurzfristige Änderungen des Wankwinkels eines Fahrzeugs, wie sie z.B. bei einer Kurvenfahrt auftreten, erschweren z. B. eine genaue Fahrspurprädiktion. Eine genaue Kenntnis der Gierrate bzw. des Wankwinkels kann zur Korrektur der Sensordaten genutzt werden
Das Ausgangssignal eines Gierratensensors unterliegt gewissen Fehlereinflüssen, so kann das Ausgangssignal z.B. aufgrund der Temperaturabhängigkeit des Sensors langsam driften. Zur genauen Bestimmung der Gierrate ist also die Kalibrierung der Messwerte auch während des Fahrzeugbetriebs erforderlich.

Die Patentschrift DE 19502858 C1 offenbart ein Verfahren und eine Schaltungsanordnung zum Kompensieren der Signalfehler eines Giergeschwindigkeitssensors. Dabei wird während eines Fahrzyklus der Lenkradwinkel bzw. die Querbeschleunigung innerhalb eines vorgegebenen Zeitintervalls auf Übereinstimmung mit dem Wert null überwacht, wobei eine gewisse Toleranzbreite zugelassen wird, und dabei wird der Offset-Wert des Sensorsignals festgestellt.

Die DE 10327695 A1 zeigt ein Verfahren und eine Vorrichtung zur Bestimmung des Schwimmwinkels mittels Fahrzeugspurerkennung. Dazu wird insbesondere eine Videosensorik eingesetzt, aus der geometrische Daten über Fahrzeug und Fahrbahn gewonnen werden.

Es ist daher Aufgabe der hier vorliegenden Erfindung, ein Verfahren zur Kalibrierung einer Gierratenmessung anzugeben, die während des Fahrzeugbetriebs durchgeführt wird.

Diese Aufgabe ist erfindungsgemäß gelöst durch ein Verfahren mit den in Anspruch 1 beschriebenen Merkmalen. Vorteilhafte Weiterbildungen sind den Unteransprüchen zu entnehmen.

Es wird ein Verfahren zur Kalibrierung einer Gierratenmessung in einem Kraftfahrzeug vorgestellt, das während des Fahrzeugbetriebs ausgeführt wird. Das Kraftfahrzeug weist zumindest eine Vorrichtung zur Bestimmung der Gierrate, einen Lenkwinkelsensor und ein vorwärts gerichtetes Kamerasystem auf, das die Fahrzeugumgebung in Fahrtrichtung erfasst. Zur Erfassung des Gierwinkels mit einer hohen Genauigkeit, wird zumindest eine erste Kalibrierung der gemessenen Gierrate im Stillstand und zumindest eine zweite Kalibrierung während der Fahrt durchgeführt.
Die Stillstandserkennung des Fahrzeugs kann z.B. anhand einer Geschwindigkeitsmessung erfolgen. Alternativ können auch die Stellung der Handbremse (aktiviert oder nicht), die Stellung des Schalthebels (Gang eingelegt oder nicht), die Gierrate, die Raddrehzahl u.s.w. als Indikator dienen. Die Indikatoren können auch beliebig miteinander verknüpft werden. Z.B. wird ein Stillstand des Fahrzeugs angenommen, wenn kein Gang eingelegt und die Handbremse aktiviert ist. Verändert sich die Gierrate stark innerhalb eines vorgegebenen Zeitintervalls, so wird angenommen, dass sich das Fahrzeug bewegt. Es werden bei einer Kalibrierung während der Fahrt die Bilddaten zumindest eines Bildaufnehmers verwendet, wobei der Bildaufnehmer die Umgebung vor dem Kraftfahrzeug erfasst. Aus den Bilddaten wird eine Fahrspur prädiziert. Aus dem Verlauf der Fahrspur wird eine Geradeausfahrt oder Kurvenfahrt des Fahrzeugs und damit die Gierrate abgeschätzt. Aus der Gierrate ω_{z} und der Fahrzeuggeschwindigkeit v kann auch die Querbeschleunigung a_{y} des Fahrzeugs mit der Relation a_{y}=vω_{z} bestimmt werden.
In einer besonderen Ausgestaltung der Erfindung wird für eine Kalibrierung während der Fahrt der Lenkwinkel herangezogen. Dies ist insbesondere der Fall, wenn eine Abschätzung der Gierrate aus einem Kamerabild nicht erfolgreich ist.
In einer bevorzugten Ausgestaltung der Erfindung wird bei Stillstand des Fahrzeugs eine Mittelung der Gierratenwerte über einen bestimmten Zeitraum vorgenommen und der gemittelte Wert als Korrekturwert für zukünftige Messungen verwendet. Bei der Mittelung werden der erste und der letzte Wert und Werte die eine große Abweichung zu den benachbarten Messwerten aufweisen nicht berücksichtigt.

In einer bevorzugten Ausgestaltung der Erfindung der Ausgabewert der Gierrate in mehreren Schritten kompensiert wird. Eine Zuschaltung des Korrekturwerts in kleinen Schritten innerhalb eines bestimmten Zeitintervalls ist insbesondere dann sinnvoll, wenn der Korrekturwert einen vorgegebenen Wert überschreitet. Ebenso ist stattdessen eine kontinuierliche Korrektur der Ausgabewerte in einem vorgegebenen Zeitintervall möglich

Die Erfindung wird nachfolgend anhand von Ausführungsbeispielen und einer Abbildung näher erläutert.

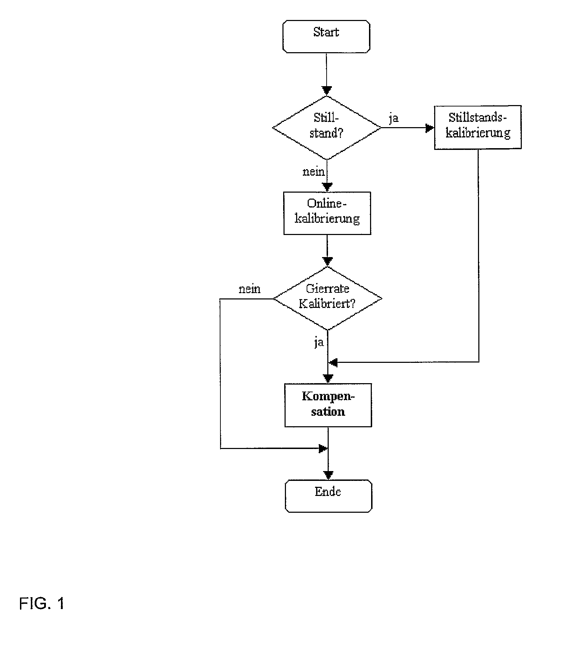

Fig.1: Schematische Darstellung eines Verfahrens zur Kalibrierung der Gierrate

In Figur 1 ist schematisch ein Verfahren zur Kalibrierung der Gierrate dargestellt. Nach dem Start des Verfahrens wird zunächst der Bewegungszustand des Fahrzeugs geprüft. Befindet es sich im Stillstand, so wird die dafür vorgesehene Stillstandskalibrierung durchgeführt. Ergibt sich dabei ein Korrekturwert, so wird der Ausgabewert der Gierrate in der Kompensationsstufe entsprechend angepasst. Befindet sich das Fahrzeug nicht im Stillstand wird eine Onlinekalibrierung durchgeführt. Dazu werden die Bilddaten zumindest eines Bildaufnehmers verwendet. Der Bildaufnehmer erfasst die Umgebung vor dem Kraftfahrzeug und aus dem Verlauf der Fahrspur wird eine Geradeausfahrt oder Kurvenfahrt des Fahrzeugs und damit die Gierrate abgeschätzt. Z.B. wird eine Geradeausfahrt erkannt, wenn das Fahrzeug eine vorgegebene Geschwindigkeit überschreitet. Diese Geschwindigkeit liegt in diesem Beispiel zwischen 80 und 100 km/h. Ein weiterer Indikator für eine Geradeausfahrt ist, wenn die Krümmung der prädizierte Fahrspur einen vorgegebenen Radius überschreitet. Ein solcher vorgegebener Radius beträgt in diesem Beispiel 2000 m. Anhand der genannten Indikatoren Fahrzeuggeschwindigkeit, Krümmungsradius und der Fahrspur wird abgeleitet, ob das Fahrzeug aktuell eine Geradeausfahrt ausführt. Es ist für den Fachmann ersichtlich, dass in weiteren Ausführungsbeispielen andere Indikatoren, wie z.B. die Querbeschleunigung und / oder Lenkwinkel, und andere vorgegebene Grenzwerte angegeben werden können. Eine Kalibrierung wird durchgeführt, wenn eine Geradeausfahrt festgestellt wurde. Es ist ebenfalls denkbar eine Kalibrierung in einer Kurve vorzunehmen, falls die Krümmung mit dem System zur Umgebungserfassung hinreichend genau erfasst werden kann. Dazu wird innerhalb eines vorgegebenen Zeitintervalls, das i. d. R. eine oder wenige Minuten beträgt, die Gierrate aufgenommen, gemittelt und es wird ein Korrekturwert bestimmt. Ist der Krümmungsradius der Fahrspur z. B. aufgrund schlechter Witterungsverhältnisse oder schlechter Fahrbahnmarkierungen nicht möglich wird nur die Stillstandkalibrierung verwendet. In einem weiteren Ausführungsbeispiel der Erfindung wird in diesem Fall der Lenkwinkel und/oder die Querbeschleunigung zur Onlinekalibrierung verwendet. Der Ausgabewert der Gierrate wird in mehreren Schritten kompensiert, so dass erst nach einem vorgegebenen Zeitintervall von wenigen Sekunden bis Minuten der Ausgabewert vollständig korrigiert ist.

## Patentansprüche

1. Verfahren zur Kalibrierung einer Gierratenmessung in einem Kraftfahrzeug, wobei das Kraftfahrzeug zumindest eine Vorrichtung zur Bestimmung der Gierrate, ein Kamerasystem, einen Lenkwinkelsensor oder einen Querbeschleunigungssensor aufweist, wobei eine erste Kalibrierung im Stillstand und eine zweite Kalibrierung während der Fahrt erfolgt, **dadurch gekennzeichnet, dass**
bei einer Kalibrierung während der Fahrt
• das Kamerasystem die Umgebung vor dem Kraftfahrzeug erfasst,
• aus den Bilddaten des Kamerasystems eine Fahrspur prädiziert wird,
• aus dem Verlauf der Fahrspur eine Geradeausfahrt oder Kurvenfahrt und damit die Gierrate abgeschätzt wird und
• eine Kalibrierung während der Fahrt durchgeführt wird, wenn eine Geradeausfahrt festgestellt wurde, wobei abgeleitet wird, dass das Fahrzeug aktuell eine Geradeausfahrt ausführt, wenn das Fahrzeug eine vorgegebene Geschwindigkeit überschreitet und/oder die Krümmung der prädizierten Fahrspur einen vorgegebenen Radius überschreitet, und wobei anhand der Indikatoren Fahrzeuggeschwindigkeit, Krümmungsradius und Fahrspur abgleitet wird, ob das Kraftfahrzeug aktuell eine Geradeausfahrt ausführt.

2. Verfahren nach Anspruch 1, **dadurch gekennzeichnet, dass** eine Kalibrierung in einer Kurve vorgenommen wird, wobei der Krümmungsradius mit dem Kamerasystem erfasst wird und die Gierrate innerhalb eines vorgegebenen Zeitintervalls aufgenommen und gemittelt wird und ein Korrekturwert bestimmt wird.

3. Verfahren nach Anspruch 2, **dadurch gekennzeichnet, dass** nur die Stillstandskalibrierung verwendet wird, falls die Bestimmung des Krümmungsradius nicht möglich ist.

4. Verfahren nach einem der vorherigen Ansprüche,
**dadurch gekennzeichnet, dass**
für eine Kalibrierung während der Fahrt der Lenkwinkel und / oder die Querbeschleunigung herangezogen wird, wenn eine Abschätzung der Gierrate aus einem Kamerabild nicht erfolgreich ist.

5. Verfahren nach einem der vorherigen Ansprüche,
**dadurch gekennzeichnet, dass**
bei Stillstand des Fahrzeugs eine Mittelung der Gierratenwerte über einen bestimmten Zeitraum vorgenommen wird, und der gemittelte Wert als Korrekturwert berücksichtigt wird.

6. Verfahren nach einem der vorherigen Ansprüche,
**dadurch gekennzeichnet, dass**
der Ausgabewert der Gierrate in mehreren Schritten kompensiert wird, wenn ein Korrekturwert ermittelt wurde.

## Claims

1. A method for the calibration of a yaw rate measurement in a motor vehicle, wherein the motor vehicle has at least a device for determining the yaw rate, a camera system, a steering-angle sensor or a lateral-acceleration sensor, wherein a first calibration is performed while the vehicle is not in motion and a second calibration is performed while the vehicle is in motion,
**characterized in that**,
when a calibration is performed while the vehicle is in motion,
• the camera system covers that region of the surroundings which is in front of the motor vehicle,
• a traffic lane is predicted from the image data of the camera system,
• a straight-ahead motion or a cornering and thus the yaw rate is estimated from the course of the traffic lane, and
• a calibration is performed while the vehicle is in motion if a straight-ahead motion was determined, wherein one derives that the vehicle is currently performing a straight-ahead motion if the vehicle exceeds a predetermined speed and/or the curvature of the predicted traffic lane exceeds a predetermined radius, and wherein one derives, on the basis of the indicators "vehicle speed", "radius of curvature" and "traffic lane", whether the motor vehicle is currently performing a straight-ahead motion.

2. The method according to Claim 1, **characterized in that**
a calibration is performed in a bend, wherein the radius of curvature is acquired by means of the camera system and the yaw rate is recorded and averaged within a predetermined time interval and a correction value is determined.

3. The method according to Claim 2, **characterized in that**
only the calibration performed while the vehicle is not in motion is used if it is impossible to determine the radius of curvature.

4. The method according to any one of the preceding claims, **characterized in that** the steering angle and/or lateral acceleration are/is used for a calibration performed while the vehicle is in motion if an estimation of the yaw rate from a camera image is not successful.

5. The method according to any one of the preceding claims, **characterized in that** while the vehicle is not in motion, the yaw rate values are averaged over a particular period of time, and the averaged value is taken into account as a correction value.

6. The method according to any one of the preceding claims, **characterized in that** the output value of the yaw rate is compensated for in several steps if a correction value was determined.

## Revendications

1. Procédé de calibrage d'une mesure de la vitesse de lacet dans un véhicule automobile, le véhicule automobile présentant au moins un dispositif pour la définition de la vitesse de lacet, un système de caméra, un capteur d'angle de braquage ou un capteur d'accélération transversale, un premier calibrage s'effectuant à l'arrêt et un deuxième calibrage s'effectuant pendant la marche, **caractérisé en ce que**,
lors d'un calibrage pendant la marche,
• le système de caméra détecte l'environnement devant le véhicule automobile,
• une voie de circulation est prédite à partir des données images du système de caméra,
• un déplacement en ligne droite ou un déplacement en virage et donc la vitesse de lacet sont estimés à partir du tracé de la voie de circulation, et
• un calibrage est effectué pendant la marche quand un déplacement en ligne droite a été constaté, étant déduit que le véhicule effectue actuellement un déplacement en ligne droite si le véhicule dépasse une vitesse spécifiée et/ou si la courbure de la voie de circulation prédite dépasse un rayon spécifié, et il est défini, à l'aide des indicateurs vitesse du véhicule, rayon de courbure et voie de circulation, si le véhicule automobile effectue actuellement un déplacement en ligne droite.

2. Procédé selon la revendication 1, **caractérisé en ce qu'**un calibrage est entrepris dans un virage, le rayon de courbure étant détecté avec le système de caméra, et la vitesse de lacet étant enregistrée et moyennée à l'intérieur d'un intervalle de temps spécifié et une valeur de correction étant définie.

3. Procédé selon la revendication 2, **caractérisé en ce que** seul le calibrage à l'arrêt est utilisé dans le cas où la définition du rayon de courbure n'est pas possible.

4. Procédé selon l'une des revendications précédentes,
**caractérisé en ce que**,
pour un calibrage pendant la marche, il est fait appel à l'angle de braquage et/ou à l'accélération transversale si une estimation de la vitesse de lacet à partir d'une image de caméra n'est pas couronnée de succès.

5. Procédé selon l'une des revendications précédentes,
**caractérisé en ce que**,
lors de l'arrêt du véhicule, un calcul de la moyenne des valeurs de vitesse de lacet est entrepris sur une période de temps définie, et la valeur moyennée est prise en compte en tant que valeur de correction.

6. Procédé selon l'une des revendications précédentes,
**caractérisé en ce que**
la valeur de sortie de la vitesse de lacet est compensée en plusieurs étapes si une valeur de correction a été déterminée.
